# NEUE EUROPÄISCHE PATENTSCHRIFT

(11) **EP 2 274 206 B2**
(45) Veröffentlichungstag und Bekanntmachung des Hinweises auf die Entscheidung über den Einspruch: **02.03.2016**
(45) Hinweis auf die Patenterteilung: 02.01.2013
(21) Anmeldenummer: 09737796.4
(22) Anmeldetag: 06.04.2009
(51) Int. Cl.: B65B 19/22, G01N 21/88, G01N 21/95

(54) **VERFAHREN UND VORRICHTUNG ZUM PRÜFEN VON MIT FOLIE UMWICKELTEN ZIGARETTENPACKUNGEN**
METHOD AND DEVICE FOR TESTING CIGARETTE PACKAGES WOUND WITH FILM
PROCEDE ET DISPOSITIF POUR CONTRELER DES PAQUETS DE CIGARETTES ENVELOPPES D'UN FILM

(30) Priorität: 28.04.2008 DE 102008021199
(43) Veröffentlichungstag der Anmeldung: 19.01.2011
(73) Patentinhaber: Focke & Co. (GmbH & Co. KG), 27283 Verden (DE)
(72) Erfinder: CZARNOTTA, Michael, 28279 Bremen (DE); KRAL, Vincent, 28203 Bremen (DE); DRÜCKE, Dirk, 28205 Bremen (DE)
(74) Vertreter: Aulich, Martin
(86) Internationale Anmeldenummer: PCT/EP2009/002521
(87) Internationale Veröffentlichungsnummer: WO 2009/132752

(56) Entgegenhaltungen:
- EP-A- 0 330 495
- EP-A- 0 790 187
- EP-A- 0 902 275
- EP-A- 1 026 082
- EP-A- 1 188 674
- JP-A- 2002 214 150
- US-A1- 2008 292 780

## Beschreibung

Die vorliegende Erfindung betrifft ein Verfahren zum Prüfen von vorzugsweise bewegten Produkten mit mindestens zwei Lagen, nämlich von mit Folie umwickelten Zigarettenpackungen, wobei mindestens eine weiter innen angeordnete Lage des Produkts - innere Lage - wenigstens bereichsweise mit mindestens einer, wenigstens teilweise transparenten, weiter außen angeordneten Produktlage - äußere Lage - überdeckt ist. Des Weiteren betrifft die Erfindung eine Vorrichtung zur Prüfung von derartigen Produkten.

Zigarettenpackungen werden in der Regel zum Abschluss der Herstellung mit Banderolen, Coupons oder anderen Zuschnitten versehen. Im Anschluss daran werden sie mit einer transparenten Folie umwickelt. Eine automatisierte optische Prüfung der Zigarettenpackung, insbesondere der genannten Zuschnitte, auf Fehler ist nach der Umwicklung der Packung mit Folie äußerst schwierig. Denn die optische Prüfung, etwa mittels einer Kamera, wird von Reflexionen der Folie gestört.

Auch eine automatisierte optische Prüfung der Folie selbst ist nur schwierig durchzuführen. Denn beispielsweise von Kameras aufgenommene Abbilder der Folie werden durch Abbilder der unter der Folie angeordneten Zigarettenpackung überlagert.

Der Erfindung liegt daher die Aufgabe zugrunde, ein automatisiertes, optisches Prüfverfahren für Produkte der eingangs genannten Art anzugeben, nämlich von mit Folie umwickelten Zigarettenpackungen, bei dem beide Lagen der Produkte in möglichst zuverlässiger Weise geprüft werden können. Der Erfindung liegt weiterhin die Aufgabe zugrunde, eine Prüfvorrichtung anzugeben, mit der ein derartiges Verfahren durchgeführt werden kann.

Diese Aufgabe wird gelöst durch ein Verfahren mit den Merkmalen des Anspruches 1. Weiter wird die Aufgabe gelöst durch eine Vorrichtung mit den Merkmalen des Anspruches 7.

Das erfindungsgemäße Verfahren ist demnach dadurch gekennzeichnet, dass die weiter außen angeordnete, für Licht mindestens teilweise transparente Lage des Produkts unter einem Einfallswinkel, vorzugsweise annähernd 35°, mit Licht beleuchtet wird, bei dem das an dieser Lage reflektierte Licht mindestens zu 70%, vorzugsweise zu mindestens 90%, besonders bevorzugt zu mindestens 95%, aus linear s-polarisiertem Licht besteht.

Dabei wird der s-polarisierte Anteil des von der weiter außen angeordneten Lage und/oder des von der weiter innen angeordneten Lage reflektierten Lichtes und/oder der p-polarisierte Anteil des von der weiter außen angeordneten Lage und/oder der weiter innen angeordneten Lage reflektierten Lichts jeweils mittels mindestens eines geeigneten elektrooptischen Erfassungsorgans bzw. eines Lichtdetektors - Kamera - als Bild oder Teilbild des Produkts erfasst.

Der erfasste s-polarisierte und/oder der erfasste p-polarisierte Lichtanteil werden dann ausgewertet, um Rückschlüsse auf Merkmale der weiter außen angeordneten Lage und/oder der weiter innen angeordneten Lage ziehen zu können, insbesondere hinsichtlich der Unversehrtheit und/oder hinsichtlich einer korrekten Positionierung der weiter außen angeordneten Lage und/oder der weiter innen angeordneten Lage.

Was die weiter innen angeordnete und die weiter außen angeordnete Lage betrifft, so können diese miteinander verbunden sein, aber auch unverbunden sein. Sie können insbesondere neben- oder aufeinanderliegend mit oder ohne Abstand zueinander angeordnet sein. Wichtig ist, dass die weiter außen angeordnete Lage mindestens teilweise für sichtbares Licht transparent ist. Das Material, aus dem die weiter innen angeordnete Lage besteht, unterscheidet sich bevorzugt von dem der weiter außen angeordneten Lage. Im Folgenden wird die weiter außen angeordnete Lage kurz als äußere Lage bezeichnet, die weiter innen angeordnete Lage als innere Lage. Die äußere Lage kann dabei naturgemäß zugleich auch die äußerste Lage des Produktes sein, muss dies aber nicht.

Die Erfindung geht von der Erkenntnis aus, dass transparente bzw. mindestens teilweise transparente äußere Lagen von Produkten, wie in Folie eingewickelte Zigarettenpackungen, Licht, das unter dem sogenannten Brewster-Winkel eingestrahlt wird, linear polarisiert. Mit anderen Worten ist in diesem Fall das von der zu prüfenden äußeren Lage - beispielsweise der Folie - reflektierte Licht s-polarisiert, d.h. senkrecht zur Einfallsebene des Lichtes polarisiert.

Was das Licht betrifft, mit der das Produkt beleuchtet wird, so ist dies vorzugsweise unpolarisiert. Theoretisch denkbar ist aber auch, anstelle unpolarisierten Lichtes beispielsweise zirkular polarisiertes Licht einzustrahlen.

Wenn das Licht exakt im Brewster-Winkel - bei gängigen Folien ca. 35° - eingestrahlt wird, ist annähernd oder exakt 100% des von der äußeren Lage reflektierten Lichtes s-polarisiert. Der Teil des Lichtes dagegen, der durch die Folie hindurchtritt und entsprechend den bekannten Brechungsgesetzen gebrochen wird, trifft auf die zu prüfende innere Lage des Produktes, beispielsweise eine entsprechende Fläche der Zigarettenpackung. Dies kann die Oberfläche einer Packungswandung sein, die Banderole, ein Coupon oder dergleichen. Dort wird das Licht teilweise absorbiert, teilweise reflektiert. Das von der inneren Lage reflektierte Licht ist wenigstens überwiegend p-polarisiert, d.h. parallel zur Einfallsebene des Lichtes polarisiert.

Erfindungsgemäß werden die genannten Zusammenhänge ausgenutzt, um die äußere Lage und die innere Lage optisch voneinander zu trennen. Denn der p-polarisierte Lichtanteil aus dem gesamten, von der inneren Lage und von der äußeren Lage reflektierten Lichts, stammt wenigstens überwiegend, vorzugsweise vollständig, von der inneren Lage. Durch die Erfassung des p-polarisierten Lichtanteils aus dem gesamten reflektierten Licht können daher störende, von der mindestens teilweise transparenten äußeren Lage stammende Lichtanteile, die mindestens überwiegend, vorzugsweise vollständig, s-polarisiert sind, ausgeblendet werden.

Anders herum können durch die Erfassung ausschließlich s-polarisierter Lichtanteile des reflektieren Lichtes Reflexionen der inneren Lage, also der Zigarettenpackung, mindestens teilweise ausgeblendet werden. Denn die von der inneren Lage stammenden Lichtanteile sind wenigstens überwiegend p-polarisiert.

In einer bevorzugten Ausführungsform der Erfindung, in der die äußere Lage Teil der Folienumhüllung einer Zigarettenpackung ist und die innere Lage Teil der Zigarettenpackung, insbesondere eine Banderole, ein Coupon, eine Packungswandung oder dergleichen, ist der Einfallswinkel, unter dem die äußere Lage beleuchtet wird, größer als 85% des Brewster-Winkels der äußeren Lage und kleiner als 115% des Brewster-Winkels der äußeren Lage.

Eine Prüfvorrichtung zur Durchführung des erfindungsgemäßen Verfahrens weist neben dem wenigstens einen elektrooptischen Erfassungsorgan - Kamera - ein Beleuchtungsorgan auf. Dabei ist das Beleuchtungsorgan derart auf mindestens eine Seite des Produktes zugerichtet, dass das von dem Beleuchtungsorgan ausgesandte Licht die äußere Lage des Produktes unter einem Einfallswinkel, vorzugsweise annähernd 35°, mit Licht beleuchtet, bei dem das an dieser Lage reflektierte Licht mindestens zu 70%, vorzugsweise zu mindestens 90%, besonders bevorzugt zu mindestens 95 % aus linear s-polarisiertem Licht besteht. Im Strahlweg des an der äußeren Lage und/oder der inneren Lage reflektierten Lichtes ist ein Polarisationsfilter zum Filtern des p-polarisierten Lichtes und/oder ein Polarisationsfilter zum Filtern des s-polarisierten Lichts angeordnet. Die wenigstens eine Kamera ist derart positioniert, dass sie das s-polarisierte Licht und/oder das p-polarisierte Licht nach Durchtritt durch den oder die Polarisationsfilter jeweils separat als Bild oder Teilbild des Produkts erfasst. Vorzugsweise sind mindestens zwei Kamera vorhanden.

Weitere Besonderheiten der Erfindung ergeben sich aus den beigefügten Unteransprüchen, der nachfolgenden Beschreibung bevorzugter Ausführungsbeispiele sowie den beigefügten Zeichnungen. Darin zeigen:
- Fig. 1: eine schematische Schnittansicht einer erfindungsgemäßen Prüfvorrichtung,
- Fig. 2: eine weitere Ausführungsform einer erfindungsgemäßen Prüfvorrichtung in schematischer Schnittansicht, und
- Fig. 3: die Prüfvorrichtung aus Fig. 2 in teilweise geschnittener Perspektivansicht.

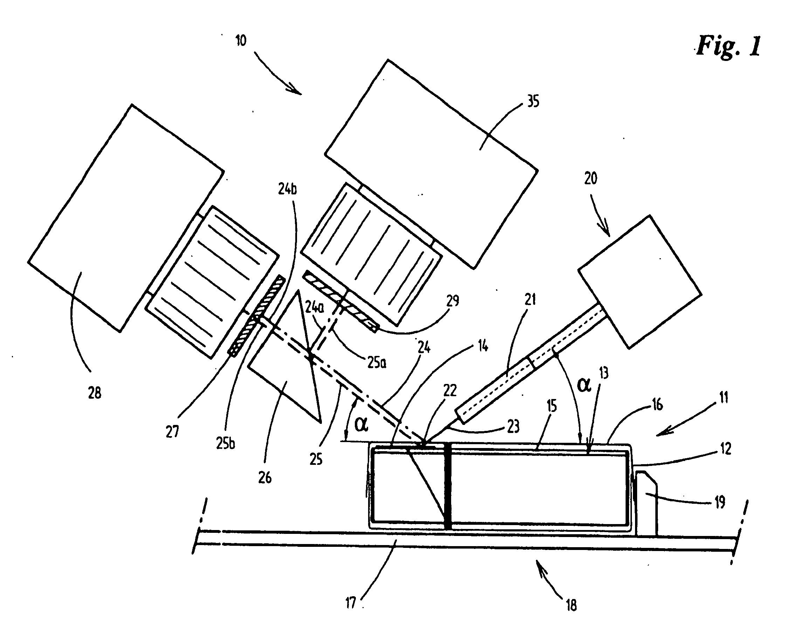

Fig. 1 zeigt eine Prüfvorrichtung 10, mit der Produkte 11 im Rahmen eines automatisierten, im Wesentlichen optischen Verfahrens geprüft werden können. Das Produkt 11 ist eine mit einer Folie 12 umwickelte Zigarettenpackung 13. Die Folie 12 ist für sichtbares Licht im Wesentlichen transparent.

Während des Prüfvorgangs prüft die Prüfvorrichtung 10 zum einen eine weiter außen angeordnete Lage des Produktes 11 - äußere Lage -, nämlich die oberhalb der Vorderwand 15 der Zigarettenpackung 13 angeordnete Folienvorderseite 16.

Zum anderen prüft die Prüfvorrichtung 10 eine weiter innen angeordnete Lage - innere Lage - des Produktes 11, nämlich eine an der Vorderwand 15 angeordnete Banderole 14, die naturgemäß ebenfalls von der Folie 12, nämlich von der Folienvorderseite 16, überdeckt ist.

Während des Prüfvorgangs wird das Produkt 11, also die mit der Folie 12 umwickelte Zigarettenpackung 13, unterhalb der Prüfvorrichtung 10 an dieser vorbei bewegt. Zu diesem Zweck liegt die mit der Folie 12 umwickelte Zigarettenpackung 13 auf einem Fördertrum 17 eines nicht näher dargestellten Förderers 18 einer ebenfalls nicht dargestellten Zigarettenverpackungsmaschine auf. Ein Mitnehmer 19 des Fördertrums 17 liegt an der Unterseite der mit der Folie 12 umwickelten Zigarettenpackung 13 an, wodurch die Packung 13 bei Bewegung des Fördertrums 17 nach links mitgeführt wird.

Die Prüfvorrichtung 10 weist ein Beleuchtungsorgan 20 auf, mit dem die Folienvorderseite 16 sowie die darunter angeordnete Banderole 14 streifenförmig mit unpolarisiertem Licht 23 beleuchtet wird. Zu diesem Zweck verfügt das Beleuchtungsorgan 20 über eine nicht näher dargestellte Lichtquelle aus einer Mehrzahl von LEDs. Naturgemäß kann auch jede andere geeignete Lichtquelle eingesetzt werden. Das von den LEDs ausgehende Licht wird durch einen Beleuchtungskörper 21 geleitet, der als optischer Diffusor für eine gleichmäßige Ausleuchtung eines beleuchteten, streifenförmigen Abschnitts 22 auf der Folienvorderseite 16 bzw. der darunter angeordneten Banderole 14 sorgt. Dabei weist das Austrittsende des Diffusors 21, durch das das Licht in Richtung der Folienvorderseite 16 bzw. der Banderole 14 austritt, eine gewölbte, nämlich konkav ausgebildete Oberfläche 36 auf. Mit dieser konkaven Oberfläche 36 wird eine produktionsbedingte Krümmung bzw. Wölbung der Packung 13 um deren Längsmittelachse ausgeglichen. Mit anderen Worten werden Verzerrungen des beleuchteten Abschnittes 22 verhindert, die sich ansonsten durch die produktionsbedingte Wölbung der jeweiligen Packung 13 ergeben würden.

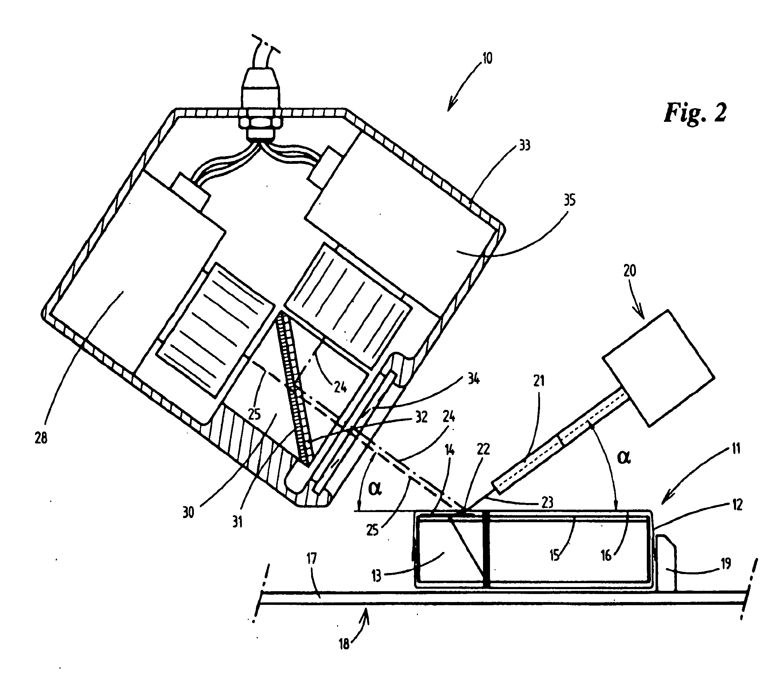

Das Beleuchtungsorgan 20 ist dabei derart oberhalb der Zigarettenpackung 13 angeordnet, dass der von dem Beleuchtungsorgan 20 ausgesandte Lichtstrahl 23 in einem Einfallswinkel auf die Folienvorderseite 16 trifft, bei dem das an dieser Folienvorderseite 16 reflektierte Licht 24 mindestens zu 70%, vorzugsweise zu mindestens 90%, besonders bevorzugt zu mindestens 95%, aus linear s-polarisiertem Licht besteht. Der Einfallswinkel ist dabei definiert als der Winkel zwischen einfallendem Strahl und dem Lot auf die Grenzfläche bzw. die Folienvorderseite 16. In den Fig. 1 und 2 beträgt der Einfallswinkel daher 90° - α, wobei α der Winkel zwischen einfallendem Strahl und Grenzfläche bzw. Folienvorderseite 16 ist.

Wenn das Licht 23 idealerweise exakt im bekannten Brewster-Winkel auf die Folienvorderseite 16 trifft, ist sogar das gesamte an der Folienvorderseite 16 reflektierte Licht 24 linear polarisiert, nämlich senkrecht zur Licht-Einfallsebene. Der Brewster-Winkel beträgt für gängige Folienarten, die zum Umwickeln von Zigarettenpackungen verwendet werden, ca. 35°, sodass der Winkel α in diesem Fall entsprechend 55° beträgt.

In den nachfolgenden Erläuterungen der Erfindung wird von den beschriebenen, idealen Bedingungen ausgegangen, d.h., von einer exakten Einhaltung des Brewster-Winkels, sodass das gesamte, an der Folienvorderseite 16 reflektierte Licht s-polarisiert ist. Allerdings liegt es auch im Rahmen der Erfindung von dem exakten Brewster-Winkel abzuweichen, sodass das an der Folienvorderseite 16 reflektierte Licht nur noch überwiegend s-polarisiert ist.

Der überwiegende Teil des von dem Beleuchtungsorgan 20 ausgehenden Lichtes 23 wird in der Regel nicht an der Folienvorderseite 16 reflektiert, sondern durchtritt diese, wird gegebenenfalls dabei leicht gebrochen und trifft anschließend auf die Banderole 14.

Wiederum ein Teil des auf die Banderole 14 treffenden Lichtes 23 wird dann an dieser reflektiert und verläuft anschließend als reflektierter Lichtstrahl 25 annähernd parallel zu dem an der Folienvorderseite 16 reflektierten, s-polarisierten Lichtstrahl 24. Der an der Banderole reflektierte Lichtstrahl 25 ist dabei überwiegend, aber in der Regel nicht vollständig p-polarisiert, also parallel zur Einfallsebene.

Im weiteren Strahlengang der reflektierten Lichtstrahlen 24, 25 befindet sich ein als Prisma ausgebildeter Strahlteiler 26. Dieser Strahlteiler 26 teilt jeweils die reflektierten Lichtstrahlen 24, 25 in Teilstrahlen auf.

Der reflektierte Lichtstrahl 24 wird dabei in zwei Teilstrahlen 24a und 24b aufgeteilt, wobei der Teilstrahl 24a senkrecht zu dem reflektierten Lichtstrahl 24 abgelenkt wird bzw. verläuft. Der Teilstrahl 24b durchtritt den Stahlteiler 26 dagegen unabgelenkt und geradlinig. In analoger Weise wird der reflektierte Lichtstrahl 25 in zwei Teilstrahlen 25a, 25b mit entsprechenden Verläufen aufgeteilt.

Im Strahlengang der den Strahlteiler 26 unabgelenkt und geradlinig durchlaufenden Teilstrahlen 24b, 25b findet sich im weiteren Verlauf ein Polarisationsfilter 27, der ausschließlich p-polarisiertes Licht durchlässt, s-polarisiertes Licht dagegen blockiert.

Aus diesem Grund wird ausschließlich der Lichtanteil des Teilstrahls 25b, der p-polarisiert ist, durch den Polarisationsfilter 27 durchgelassen und trifft auf eine nachgeordnet positionierte Kamera 28. Der Teilstrahl 24b dagegen, der vollständig s-polarisiert ist, wird blockiert.

In ähnlicher Weise ist im Strahlengang der beiden Teilstrahlen 24a, 25a ein Polarisationsfilter 29 angeordnet, der ausschließlich s-polarisiertes Licht durchlässt. Entsprechend durchtritt der vollständig s-polarisierte Teilstrahl 24a den Polarisationsfilter 29 zu 100% und trifft auf eine nachgeordnet positionierte Kamera 35. Der Teilstrahl 25a dagegen ist überwiegend p-polarisiert und wird daher wenigstens überwiegend blockiert.

Im Ergebnis gelingt es mit der Prüfvorrichtung 10, aus dem von der Folienvorderseite 16 und der Banderole 14 reflektierten Gesamtstrahl die einzelnen Lichtanteile 24, 25 mindestens weitestgehend voneinander zu separieren. Mit anderen Worten werden die von der Folienvorderseite 16 stammenden Lichtanteile des reflektierten Lichts getrennt von den von der Banderole 14 stammenden Lichtanteilen.

Demnach nimmt die Kamera 35 ein Bild auf, das wenigstens überwiegend ein Abbild der Folienvorderseite 16 ist, die Kamera 28 dagegen ein Bild, das wenigstens überwiegend ein Abbild der Banderole 14 ist. Es ist auf diese Weise möglich, Folie 12 und Zigarettenpackung 13 optisch voneinander zu trennen.

Was die Kameras 28, 35 betrifft, so sind dies bevorzugt Zeilenkameras. Die hohe Arbeitsgeschwindigkeit derartiger Kameras ermöglicht die Erfassung der jeweiligen Bilder/Teilbilder auch bei hohen Geschwindigkeiten der an der Prüfvorrichtung vorbeigeförderten Zigarettenpackungen 13.

Grundsätzlich ist es aber natürlich auch denkbar, die Zigarettenpackungen 13 während des Prüfvorgangs für eine kurze Zeitdauer abzustoppen, sodass die Bilder von unbewegten Zigarettenpackungen erfasst werden.

Unabhängig davon sind die erfindungsgemäß erfassten Bilder von hervorragender Qualität und erlauben eine besonders präzise Auswertung. Insbesondere ist es möglich, Merkmale der Banderole 14 und Merkmale der Folienvorderseite 16 zeitgleich zu messen. Beispielsweise können die Banderole 14 und die Folienvorderseite 16 auf Unversehrtheit überprüft werden, auf das Vorhandensein von kleineren oder größeren Fehlstellen, von Farbabweichungen, von Lageabweichungen oder dergleichen.

Zu diesem Zweck können die aufgenommenen Bilder mit an sich bekannten, automatisierten Bearbeitungsverfahren ausgewertet werden. Dazu werden die Bilder einer geeigneten Auswerteeinrichtung übertragen, etwa einer Rechnereinrichtung mit geeigneter Bildbearbeitungssoftware. Die Software kann durch Vergleich der aufgenommenen Bilder mit Soll-Bildern und/oder durch Mustererkennungsverfahren die genannten Merkmale erfassen.

Sollte im Rahmen der Auswertung beispielsweise erkannt werden, dass die Folienvorderseite 16 und/oder die Banderole 14 schadhaft ist, wird die entsprechende Zigarettenpackung 13 im weiteren Verlauf aus dem Produktionsprozess ausgeschleust.

Insbesondere können im Rahmen der Auswertung zur Untersuchung der äußeren Lage, nämlich der Folienvorderseite 16, jeweils das von der Kamera 28 erfasste Bild/Teilbild des p-polarisierten Lichtanteils des reflektierten Lichts von dem entsprechenden, von der Kamera 35 erfassten Bild/Teilbild des s-polarisierten Lichtanteils subtrahiert werden. Auf diese Weise ist es möglich, bei der Untersuchung der Folie störende Bildbestandteile, die von der Banderole 14 stammen, zu reduzieren. Denn wie weiter oben erwähnt, weist der von der Banderole 14 stammende Teilstrahl 25a wenigstens in geringerem Anteil s-polarisierte Lichtanteile auf, die dementsprechend den Polarisationsfilter 29 durchstrahlen können und von der Kamera 35 erfasst werden.

Mittels der geeigneten Bearbeitungssoftware können dabei beispielsweise die jeweils von der Kamera 28 bzw. von der Kamera 35 aufgenommen Bilder zunächst in Überdeckung gebracht und die zu jedem Bildpixel gehörenden Parameter, insbesondere Helligkeitswerte, in der beschriebenen Weise voneinander subtrahiert werden.

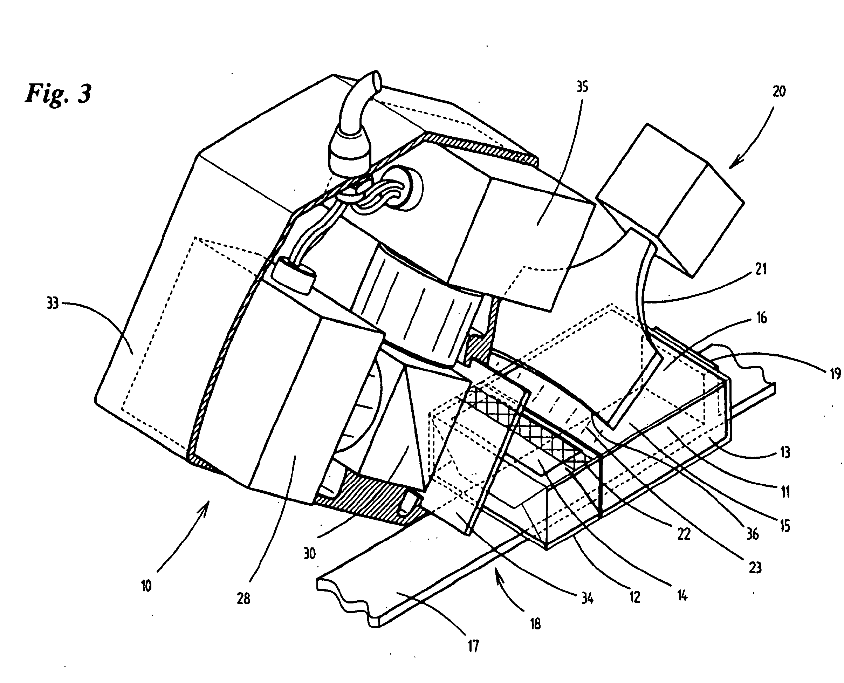

Fig. 2 und Fig. 3 zeigen eine alternative Ausführungsform der Prüfvorrichtung 10.

Die Kameras 28, 35 sowie ein nachfolgend genauer beschriebener Strahlteiler 30 mit integrierten Polarisationsfiltern 31, 32 sind innerhalb eines Gehäuses 33 angeordnet. Die reflektierten Lichtstrahlen 24, 25 treten in das Gehäuse 33 ein, indem sie zunächst ein Schutzglas 34 des Gehäuses durchtreten.

Im Strahlgang der reflektierten Strahlen 24, 25 ist im weiteren Verlauf der Strahlteiler 30 mit den Polarisationsfiltern 31, 32 angeordnet. Der s-polarisierte Strahl 24 tritt in den Strahlteiler 30 ein und wird dort vollständig um 90° abgelenkt. Der Strahlteiler 30 wirkt zu diesem Zweck mit den Polarisationsfiltern 31, 32 so zusammen, dass ausschließlich s-polarisiertes Licht um 90° abgelenkt wird, so dass die Kamera 35 dieses aufnehmen kann. Ausschließlich p-polarisiertes Licht 25 kann den Strahlteiler 30 unabgelenkt durchlaufen und von der Kamera 28 erfasst werden.

Es wird darauf hingewiesen, dass natürlich nicht nur die Banderole 14 der Zigarettenpackung 13 auf diese Weise zusammen mit der Folienvorderseite 16 untersucht werden kann. Vielmehr kann jegliche Seite der Folie 12 sowie jegliche Seite der Zigarettenpackung 13 mit der Prüfvorrichtung 10 untersucht werden.

### Bezugszeichenliste

- 10: Prüfvorrichtung
- 11: Produkt
- 12: Folie
- 13: Zigarettenpackung
- 14: Banderole
- 15: Vorderwand
- 16: Folienvorderseite
- 17: Fördertrum
- 18: Förderer
- 19: Mitnehmer
- 20: Beleuchtungsorgan
- 21: Beleuchtungskörper
- 22: Abschnitt
- 23: Lichtstrahl
- 24: Lichtstrahl
- 24a: Teilstrahl
- 24b: Teilstrahl
- 25: Lichtstrahl
- 25a: Teilstrahl
- 25b: Teilstrahl
- 26: Strahlteiler
- 27: Polarisationsfilter
- 28: Kamera
- 29: Polarisationsfilter
- 30: Strahlteiler
- 31: Polarisationsfilter
- 32: Polarisationsfilter
- 33: Gehäuse
- 34: Schutzglas
- 35: Kamera
- 36: konkave Oberfläche

## Patentansprüche

1. Verfahren zum Prüfen von bewegten Produkten (11) mit mindestens zwei Lagen, nämlich von mit Folie umwickelten Zigarettenpackungen (13), wobei mindestens eine weiter innen angeordnete Lage (14) des Produkts (11) - innere Lage - wenigstens bereichsweise mit mindestens einer, wenigstens teilweise transparenten, weiter außen angeordneten Produktlage (16) - äußere Lage - überdeckt ist, wobei die äußere Lage ein Teil der Folienumhüllung (12) der Zigarettenpackung (13) ist, **gekennzeichnet durch** folgende Schritte:
a) die äußere Lage (16) des Produktes (11) wird unter einem Einfallswinkel, vorzugsweise annähernd 35°, mit vorzugsweise unpolarisiertem Licht beleuchtet, bei dem das an dieser Lage (16) reflektierte Licht mindestens zu 70%, vorzugsweise zu mindestens 90%, besonders bevorzugt zu mindestens 95 % aus linear s-polarisiertem Licht besteht,
b) der s-polarisierte Anteil des von der äußeren Lage (16) und/oder des von der inneren Lage (14) reflektierten Lichtes und/oder der p-polarisierte Anteil des von der äußeren Lage (16) und/oder der inneren Lage (14) reflektierten Lichtes werden jeweils separat mittels mindestens eines geeigneten elektrooptischen Erfassungsorgans (28, 35) - Kamera - als Bild oder Teilbild des Produkts (11) erfasst,
c) der erfasste s-polarisierte und/oder der erfasste p-polarisierte Lichtanteil werden ausgewertet, um Rückschlüsse auf Merkmale der äußeren Lage (16) und/oder der inneren Lage (14) ziehen zu können.
d) zur Untersuchung der äußeren Lage (16) des Produkts (11) umfasst die Auswertung das Subtrahieren eines Bildes/Teilbildes des p-polarlsierten Lichtanteils von einem Bild/Teilbild des s-polarisierten Lichtanteils.

2. Verfahren gemäß Anspruch 1, **dadurch gekennzeichnet, dass** zur Untersuchung der inneren Lage (14) der p-polarisierte Lichtanteil des reflektierten Lichts, nämlich das p-polarisierte Bild/Teilbild des Produkts (11) ausgewertet wird.

3. Verfahren gemäß einem oder mehreren der vorhergehenden Ansprüche, **dadurch gekennzeichnet, dass** zur Erkennung von Fehlern einer oder beider Lagen (14, 16) des Produktes (11) die p-polarisierten und/oder s-polarisierten Biider/Teilbilder des Produktes (11) mittels geeigneter Bildbearbeitungsverfahren ausgewertet werden, insbesondere indem die Fehler durch einen Vergleich von gespeicherten Sollbildern/Sollteilbildern mit den von der Kamera (28, 35) aufgenommenen Bildern/Teilbildern des Produkts (11) erkannt werden oder indem die Fehler innerhalb der von der Kamera (28, 35) aufgenommenen Bilder/Teilbilder mittels geeigneter Mustererkennungsverfahren erkannt werden.

4. Verfahren gemäß einem oder mehreren der vorhergehenden Ansprüche, **dadurch gekennzeichnet, dass** der s- und/oder der p-polarisierte Lichtanteil aus dem reflektierten Licht jeweils mittels geeigneter Polarisationsfilter (27, 29, 31, 32) herausgefiltert wird.

5. Verfahren gemäß einem oder mehreren der vorhergehenden Ansprüche, **dadurch gekennzeichnet, dass** die Produkte (11) während des Prüfvorgangs mittels eines Förderers (18) an der Kamera (28, 35) vorbei bewegt werden.

6. Verfahren gemäß einem oder mehreren der vorhergehenden Ansprüche, **dadurch gekennzeichnet, dass** die innere Lage (14) ein Teil der Zigarettenpackung (13), insbesondere eine Banderole, ein Coupon, eine Packungswandung oder dergleichen, wobei der Einfallswinkel, unter dem die äußere Lage (16) beleuchtet wird, größer ist als 85% des Brewster-Winkels der äußeren Lage (16) und kleiner als 115% des Brewster-Winkels der äußeren Lage (16), insbesondere dem Brewster-Winkel der äußeren Lage (16) annähernd entspricht.

7. Vorrichtung zur Prüfung von bewegten Produkten mit mindestens zwei Lagen (14, 16), nämlich von mit Folie umwickelten Zigarettenpackungen (13), wobei mindestens eine weiter innen angeordnete Lage (14) des Produkts (11) - innere Lage - wenigstens bereichsweise mit mindestens einer, wenigstens teilweise transparenten, weiter außen angeordneten Produktlage (16) - äußere Lage - überdeckt ist, wobei die äußere Lage ein Teil der Folienumhüllung (12) der Zigarettenpackung (13) ist, wobei die Vorrichtung mindestens ein Beleuchtungsorgan (20) aufweist sowie wenigstens ein elektrooptisches Erfassungsorgan (28, 35) - Kamera -, **gekennzeichnet durch** folgende Merkmale:
a) das Beleuchtungsorgan (20) ist derart auf mindestens eine Seite des Produktes (11) zugerichtet, dass das von dem Beleuchtungsorgan (20) ausgesandte, vorzugsweise unpolarisierte Licht die äußere Lage (16) des Produktes (11) unter einem Einfallswinkel, vorzugsweise annähernd 35°, mit Licht beleuchtet, bei dem das an dieser Lage reflektierte Licht mindestens zu 70%, vorzugsweise zu mindestens 90%, besonders bevorzugt zu mindestens 95 % aus linear s-polarisiertem Licht besteht,
b) im Strahlweg des an der äußeren Lage (16) und/oder der inneren Lage (14) reflektierten Lichtes ist ein Polarisationsfilter (27) zum Filtern des p-polarisierten Lichtes und/oder ein Polarisationsfilter (29) zum Filtern des s-polarisierten Lichts angeordnet,
c) die wenigstens eine Kamera (28, 35) ist derart positioniert, dass sie das s-polarisierte Licht und/oder das p-polarisierte Licht nach Durchtritt **durch** den oder die Polarisationsfilter (27, 29) jeweils separat als Bild oder Teilbild des Produkts erfasst.
d) die Vorrichtung weist eine Auswerteeinheit auf, die die von der Kamera (28, 35) übermittelten Bilder auswertet, insbesondere zur Erkennung von Fehlern der äußeren und/oder inneren Lage (14, 16) des Produkts (11),
e) die Auswerteeinheit ist derart ausgebildet, dass sie zur Untersuchung der äußeren Lage (16) des Produkts (11) ein Bild/Teilbild des p-polarisierten Lichtanteils von einem Bild/Teilbild des s-polarisierten Lichtanteils subtrahiert.

8. Vorrichtung gemäß Anspruch 7, **dadurch gekennzeichnet, dass** die Vorrichtung mindestens zwei Kameras (28, 35) aufweist, nämlich eine erste Kamera (35) zur Erfassung des s-polarisierten Lichtanteils des reflektierten Lichts und eine zweite Kamera (28) zur Erfassung des p-polarisierten Lichtanteils des reflektierten Lichts.

9. Vorrichtung gemäß Anspruch 8, **dadurch gekennzeichnet, dass** das von dem Produkt reflektierte Licht mittels eines Strahlteilers (26) in zwei Teilstrahlen geteilt wird, wobei die erste Kamera (35) zur Erfassung des ersten Teilstrahls in dessen Strahlgang und die zweite Kamera (28) in dem Strahlgang des zweiten Teilstrahls positioniert ist, wobei im Strahlgang des ersten Teilstrahls vor der ersten Kamera (35) ein für p-polarisiertes Licht undurchlässiger, für s-polarisiertes Licht durchlässiger Polarisationsfilter und im Strahlgang des zweiten Teilstrahls vor der zweiten Kamera ein für s-polarisiertes Licht undurchlässiger, für p-polarisiertes Licht durchlässiger Polarisationsfilter angeordnet ist.

10. Vorrichtung gemäß Anspruch 9, **dadurch gekennzeichnet, dass** die Polarisationsfilter (31, 32) Teil des Strahlteilers (30) sind.

11. Vorrichtung gemäß einem oder mehreren der Ansprüche 7 - 10, **dadurch gekennzeichnet, dass** die Kamera (28, 35) als Zeilenkamera ausgebildet ist mit einer einzelnen Sensorzeile.

12. Vorrichtung gemäß einem oder mehreren der Ansprüche 7 - 11, **dadurch gekennzeichnet, dass** das Beleuchtungsorgan (20) derart ausgebildet und positioniert ist, dass es auf dem Produkt (11) eine streifenförmige, möglichst gleichmäßig ausgeleuchtete Beleuchtungsfläche erzeugt.

## Claims

1. A method for testing moving products (11) having at least two layers, specifically cigarette packages (13) wrapped with film, wherein at least one layer (14) of the product (11), which is arranged further inwards, - the inner layer -, is covered at least regionally by at least one, at least partially transparent product layer (16), which is arranged further outwards, - the outer layer -, wherein the outer layer is a part of the film wrap (12) of the cigarette package (13), **characterized by** the following steps:
a) the outer layer (16) of the product (11) is illuminated by preferably unpolarised light at an angle of incidence, preferably almost 35°, with the light that is reflected at this layer (16) comprising at least 70%, preferably at least 90%, especially preferably at least 95%, of linearly s-polarized light,
b) the s-polarized component of the light reflected by the outer layer (16) and/or of the light reflected by the inner layer (14) and/or the p-polarized component of the light reflected by the outer layer (16) and/or of the light reflected by the inner layer (14) is/are recorded in each case separately using at least one suitable electrooptic recording element (28, 35) - camera - in the form of an image or partial image of the product (11),
c) the recorded s-polarized and/or the recorded p-polarized light component is/are evaluated in order to be able to draw conclusions relating to features of the outer layer (16) and/or of the inner layer (14),
d) for examining the outer layer (16) of the product (11), the evaluation comprises the subtraction of an image/partial image of the p-polarized light component from an image/partial image of the s-polarized light component.

2. The method as claimed in claim 1, **characterized in that,** for examining the inner layer (14), the p-polarized light component of the reflected light, specifically the p-polarized image/partial image of the product (11), is evaluated.

3. The method as claimed in one or more of the preceding claims, **characterized in that,** for detecting defects in one or both layers (14, 16) of the product (11), the s-polarized and/or p-polarized images/partial images of the product (11) is/are evaluated using suitable image processing methods, in particular by detecting the defects by way of comparing stored reference images/reference partial images with the images/partial images of the product (11) recorded by the camera (28, 35) or by detecting the defects inside the images/partial images recorded by the camera (28, 35) using suitable pattern recognition methods.

4. The method as claimed in one or more of the preceding claims, **characterized in that** the s-polarized and/or the p-polarized light component is/are filtered out of the reflected light in each case using suitable polarization filters (27, 29, 31, 32).

5. The method as claimed in one or more of the preceding claims, **characterized in that** the products (11) are moved past the camera (28, 35) using a conveyor (18) during the testing process.

6. The method as claimed in one or more of the preceding claims, **characterized in that** the inner layer (14) is part of the cigarette package (13), in particular a label, a coupon, a package wall or the like, wherein the angle of incidence, under which the outer layer (16) is illuminated, is greater than 85% of the Brewster angle of the outer layer (16) and smaller than 115% of the Brewster angle of the outer layer (16), in particular approximately corresponds to the Brewster angle of the outer layer (16).

7. A device for testing moving products having at least two layers (14, 16), specifically cigarette packages (13) wrapped with film, wherein at least one layer (14) of the product (11), which is arranged further inwards, - the inner layer -, is covered at least regionally by at least one, at least partially transparent product layer (16), which is arranged further outwards, - the outer layer -, wherein the outer layer is a part of the film wrap (12) of the cigarette package (13), wherein the device has at least one illumination element (20) and at least one electrooptic recording element (28, 35) - camera -, **characterized by** the following features:
a) the illumination element (20) is directed at least at one side of the product (11) such that the preferably unpolarised light emitted by the illumination element (20) illuminates the outer layer (16) of the product (11) under an angle of incidence, preferably almost 35°, with light, with the light reflected on this layer comprising at least 70%, preferably at least 90%, especially preferably at least 95%, of linearly s-polarized light,
b) a polarization filter (27) for filtering the p-polarized light and/or a polarization filter (29) for filtering the s-polarized light is/are arranged in the beam path of the light reflected at the outer layer (16) and/or the inner layer (14),
c) the at least one camera (28, 35) is positioned such that it records the s-polarized light and/or the p-polarized light after passage through the polarization filter(s) (27, 29) in each case separately as an image or partial image of the product,
d) the device has an evaluation unit, which evaluates the images transmitted by the camera (28, 35), especially for detecting defects in the outer and/or inner layer (14, 16) of the product (11),
e) the evaluation unit is designed such that, for the examination of the outer layer (16) of the product (11), it subtracts an image/partial image of the p-polarized light component from an image/partial image of the s-polarized light component

8. The device as claimed in claim 7, **characterized in that** the device has at least two cameras (28, 35), specifically a first camera (35) for recording the s-polarized light component of the reflected light and a second camera (28) for recording the p-polarized light component of the reflected light.

9. The device as claimed in claim 8, **characterized in that** the light reflected by the product is split into two partial beams using a beam splitter (26), wherein, for recording the first partial beam, the first camera (35) is positioned in the beam path of said first partial beam and the second camera (28) is positioned in the beam path of the second partial beam, wherein a polarization filter which blocks p-polarized light and transmits s-polarized light is arranged in the beam path of the first partial beam upstream of the first camera (35) and a polarization filter which blocks s-polarized light and transmits p-polarized light is arranged in the beam path of the second partial beam upstream of the second camera.

10. The device as claimed in claim 9, **characterized in that** the polarization filters (31, 32) are part of the beam splitter (30).

11. The device as claimed in one or more of claims 7-10, **characterized in that** the camera (28, 35) is configured in the form of a line-scan camera with a single sensor line.

12. The device as claimed in one or more of claims 7-11, **characterized in that** the illumination element (20) is configured and positioned such that it produces on the product (11) a strip-type illuminated area that is illuminated as uniformly as possible.

## Revendications

1. Procédé pour contrôler des produits (11) en mouvement pourvus d'au moins deux couches, à savoir des paquets de cigarettes (13) enveloppés dans du film, dans lequel au moins une couche (14) du produit (11) disposée plus à l'intérieur, la couche interne, est recouverte au moins par zones par au moins une couche de produit (16) au moins partiellement transparente, disposée plus à l'extérieur, la couche externe, dans lequel la couche externe est une partie de l'enveloppe par films (12) du paquet de cigarettes (13), **caractérisé par** les étapes suivantes :
a) la couche externe (16) du produit (11) est éclairée sous un angle d'incidence de préférence proche de 35°, au moyen de lumière de préférence non polarisée, le lumière réfléchie sur cette couche (16) étant constituée de lumière linéairement polarisée s à au moins 70%, de préférence à au moins 90%, et de préférence particulière à au moins 95%,
b) la composante polarisée s de la lumière réfléchie par la couche externe (16) et/ou par la couche interne (14) et/ou la composante polarisée p de la lumière réfléchie par la couche externe (16) et/ou par la couche interne (14), sont respectivement enregistrées séparément au moyen d'au moins un organe d'enregistrement électro-optique approprié (28, 35), caméra, sous forme d'image ou d'image partielle du produit (11),
c) la composante de lumière polarisée s enregistrée et/ou polarisée p enregistrée sont exploitées pour pouvoir en tirer des conclusions sur les caractéristiques de la couche externe (16) et/ou de la couche interne (14),
d) pour l'examen de la couche externe (16) du produit (11), l'exploitation comprend la soustraction d'une image /image partielle de la composante de lumière polarisée p à une image /image partielle de la composante de lumière polarisée s.

2. Procédé selon la revendication 1, **caractérisé en ce que** pour l'examen de la couche interne (14), on exploite la composante de lumière polarisée p de la lumière réfléchie, à savoir l'image /l'image partielle polarisée p du produit (11).

3. Procédé selon une ou plusieurs des revendications précédentes, **caractérisé en ce que** pour l'identification de défauts d'une ou des deux couches (14, 16) du produit (11), on exploite les images /les images partielles polarisées p et/ou polarisées s du produit (11) au moyen de procédés appropriés de traitement d'image, notamment du fait qu'on identifie les défauts par une comparaison d'images de consigne /d'images partielles de consigne avec les images /images partielles du produit (11) enregistrées par la caméra (28, 35), ou du fait qu'on identifie les défauts à l'intérieur des images /images partielles enregistrées par la caméra (28, 35) au moyen de procédés d'identification de motifs appropriés.

4. Procédé selon une ou plusieurs des revendications précédentes, **caractérisé en ce que** la composante de lumière polarisée s et/ou p est respectivement filtrée à partir de la lumière réfléchie au moyen de filtres de polarisation appropriés (27, 29, 31, 32).

5. Procédé selon une ou plusieurs des revendications précédentes, **caractérisé en ce que** les produits (11) sont déplacés devant une caméra (28, 35) pendant le processus de contrôle au moyen d'un convoyeur (18).

6. Procédé selon une ou plusieurs des revendications précédentes, **caractérisé en ce que** la couche interne (14) est une partie du paquet de cigarettes (13) notamment une vignette, un coupon, une paroi du paquet ou similaire, l'angle d'incidence sous lequel la couche externe (16) est illuminée étant supérieur à 85% de l'angle de Brewster de la couche externe (16) et inférieur à 115% de l'angle de Brewster de la couche externe (16), ce qui correspond notamment approximativement à l'angle de Brewster de la couche externe (16).

7. Dispositif pour contrôler des produits en mouvement pourvus d'au moins deux couches (14, 16), à savoir des paquets de cigarettes (13) enveloppés dans du film, dans lequel au moins une couche (14) du produit (11) disposée plus à l'intérieur, la couche interne, est recouverte au moins par zones par au moins une couche de produit (16) au moins partiellement transparente, disposée plus à l'extérieur, la couche externe, dans lequel la couche externe est une partie de l'enveloppe par films (12) du paquet de cigarettes (13), le dispositif comportant au moins un organe d'éclairage (20) ainsi qu'au moins un organe d'enregistrement électro-optique (28, 35), caméra, **caractérisé par** les caractéristiques suivantes :
a) l'organe d'éclairage (20) est dressé sur au moins un côté du produit (11) de telle sorte que la lumière de préférence non polarisée émise à partir de l'organe d'éclairage (20) éclaire la couche externe (16) du produit (11) sous un angle d'incidence de préférence proche de 35°, au moyen de lumière de préférence non polarisée, le lumière réfléchie sur cette couche étant constituée de lumière linéairement polarisée s à au moins 70%, de préférence à au moins 90%, et de préférence particulière à au moins 95%,
b) dans le chemin de faisceau de la lumière réfléchie sur la couche externe (16) et/ou sur la couche interne (14), un filtre de polarisation (27) est disposé pour filtrer la lumière polarisée p et/ou un filtre de polarisation (29) pour filtrer la lumière polarisée s,
c) au moins une caméra (28, 35) est positionnée de manière à enregistrer la lumière polarisée s et/ou la lumière polarisée p après qu'elles aient traversé respectivement séparément le ou les filtres de polarisation (27, 29) sous la forme d'image ou d'image partielle du produit,
d) le dispositif comporte une unité d'exploitation qui exploite les images transmises par la caméra (28, 35), notamment pour l'identification de défauts de la couche externe et/ou interne (14, 16) du produit (11),
e) l'unité d'exploitation est réalisée de telle sorte qu'elle, pour l'examen de la couche externe (16) du produit (11), soustraie une image/image partielle de la composante de lumière polarisée p à une image/image partielle de la composante de lumière polarisée s.

8. Dispositif selon la revendication 7, **caractérisé en ce que** le dispositif comporte au moins deux caméras (28, 35), à savoir une première caméra (35) pour l'enregistrement de la composante de lumière polarisée s de la lumière réfléchie et une deuxième caméra (28) pour l'enregistrement de la composante de lumière polarisée p de la lumière réfléchie.

9. Dispositif selon la revendication 8, **caractérisé en ce que** la lumière réfléchie par le produit est séparée en deux faisceaux partiels au moyen du séparateur de faisceau (26), la première caméra (35) pour l'enregistrement du premier faisceau partiel étant positionnée dans son chemin de faisceau et la deuxième caméra (28) dans le chemin de faisceau du deuxième faisceau partiel, un filtre de polarisation opaque à la lumière polarisée p et transparent à la lumière polarisée s étant disposé dans le chemin de faisceau du premier faisceau partiel devant la première caméra (35), et un filtre de polarisation opaque à la lumière polarisée s et transparent à la lumière polarisée p étant disposé dans le chemin de faisceau du deuxième faisceau partiel devant la deuxième caméra.

10. Dispositif selon la revendication 9, **caractérisé en ce que** les filtres de polarisation (31, 32) font partie du séparateur de faisceau (30).

11. Dispositif selon une ou plusieurs des revendications 7 à 10, **caractérisé en ce que** la caméra (28, 35) est développée sous la forme de caméra linéaire avec une seule ligne de capteurs.

12. Dispositif selon une ou plusieurs des revendications 7 à 11, **caractérisé en ce que** l'organe d'éclairage (20) est développé et positionné de manière à engendrer sur le produit (11), une surface d'éclairage en forme de bande éclairée de manière aussi régulière que possible.
